# EUROPEAN PATENT APPLICATION

(11) **EP 2 339 218 A1**
(43) Date of publication of application: **29.06.2011**
(21) Application number: 09179880.1
(22) Date of filing: 18.12.2009
(51) Int. Cl.: F16L 37/252

(54) **A connection between two pipe parts**

(71) Applicant: Uponor Innovation AB, 73061 Virsbo (SE)
(72) Inventor: Larsson, Thomas, 736 91, Kungsör (SE); Larsson, Torgny, 73061, Virsbo (SE); Hauki, Peter J., 730 61, Virsbo (SE); Persson, Håkan, 73070, Västerfärnebo (SE); Savolainen, Mika, 15700, Lahti (FI)
(74) Representative: Huhtanen, Ossi Jaakko

(57) **Abstract**

The invention relates to a connection between two pipe parts. One of the pipe parts (1, 2) comprises a male end (3) and the other pipe part (1, 2) comprises a female end (4). The two pipe parts (1, 2) can be connected together by positioning the male end (3) to the female end (4) such that the pipe parts (1, 2) are rotated with respect to each other when they are connected. At least one end (3, 4) of one pipe part (1, 2) is provided with at least one protrusion (11) and at least one end (3, 4) of the other pipe part (1, 2) is provided with a corresponding recess such that the protrusion (11) and the recess together lock the pipe part (1, 2) to a correct positioned with respect to each other. The protrusion (11) is positioned on the outer circumference of the pipe part (1, 2), whereby the protrusion (11) is manipulatable outside of the pipe part (1, 2).

## Description

### FIELD OF THE INVENTION

The invention relates to the assembly of pipe parts.

### BACKGROUND OF THE INVENTION

The document US 6196256 discloses a manifold having a housing or body with a neck and an enlargement such that the neck can be inserted into an enlargement of another manifold. The neck is provided with grooves for receiving sealing rings. The neck carries at least one radially protecting cam which is part of a bayonet catch and co-operates with recesses in the interior wall of the enlargement. The recesses are provided with sections which extend in the axial direction and approximately in the circumferential direction. The face side of the body is provided with recesses into which noses, which are arranged on the opposite face side, latch under elastic deformation of the body when two bodies are properly connected to each other by means of the bayonet catch. The body of the manifold is provided with continuous grooves and securing plates can be inserted into the grooves for the purpose of securing the relative position of the connected bodies. The securing plates extend from the groove of one body to the respective groove of the adjacent body.

The document EP 2075496 discloses a manifold segment for integration in a fluid manifold for a heating and/or cooling system. The manifold segment comprises a fluid-tight body comprising a fluid passage. The fluid passage comprises thread means for connecting said fluid passage to the manifold in use, such that the manifold segment is positioned in a fixed position relative to said manifold, and the thread means comprise a multi-thread by which the manifold segment is connectable in at least one further fixed position in a different angular orientation relative to the manifold. The thread means require several turns of the manifold segment. Thus, the assembly of the manifold segment is rather difficult to assemble in a situation where the assembly space is limited. The manifold segment comprises stop edges for blocking the threading of the manifold segment beyond one of the fixed positions. Further, the manifold segment comprises blocking means comprising a protrusion in a front face and a corresponding receiving member for blocking the movement of the manifold segment out of one of the fixed positions.

The document WO 99/01701 discloses a water manifold which is formed of a number of elements. Each manifold element comprises a male connector end and a female connector end such that a male connector end allows attachment to the female connector end of a similar manifold segment. The male connector end is provided with external threads and the female connector end is correspondingly provided with internal threads. The manifold segment comprises locking stops such that the locking stop of a first manifold segment engages the locking stop of a second manifold segment, thereby preventing further rotation and stopping rotation when the adjacent manifold segments are similarly oriented. The manifold segment comprises upper and lower rails and is supported by a support bracket adapted to engage the rails. The support bracket comprises an upper arm and a lower arm. The lower arm is rigid to support the weight of the manifold while the upper arm is flexible to allow the manifold to snap in and out of the support bracket.

### BRIEF DESCRIPTION OF THE INVENTION

The object of the present invention is to provide a novel solution.

The solution of the invention is characterized by what is stated in the independent claims.

The connection disclosed herein is a connection between two pipe parts. One of the pipe parts comprises a male end and the other pipe part comprises a female end, whereby the two pipe parts can be connected together by positioning the male end of one pipe part to the female end of the other pipe part such that the pipe parts are rotated with respect to each other when they are connected. At least one end of one pipe part is provided with at least one protrusion and at least one end of the other pipe part is provided with a corresponding recess such that the protrusion and the recess together lock the pipe parts to a correct position with respect to each other. The protrusion is positioned on the outer circumference of the pipe part, whereby the protrusion is manipulatable by a finger or a tool, for example, outside the pipe part for enabling the opening of the connection. Thus, only the protrusion needs to be manipulated when the connection is opened and the body of the pipe part need not yield, for example. In an embodiment, a hollow is arranged behind the protrusion and the hollow is preferably longer than the protrusion. The hollow enhances the manipulation of the protrusion. In a yet further embodiment, the protrusion has a front end and a back end which extend substantially in the axial direction of the pipe part. The front end and the back end form stop edges such that the pipe parts stay in position in a reliable manner. According to yet another embodiment, the recess is a notch on the outer circumference of the pipe part whereby the pipe part, is simple and easy to manufacture.

In a further embodiment, one of the pipe parts comprises a male end and the other pipe part comprises a female end, whereby the two pipe parts can be connected together by positioning the male end of one pipe part to the female end of the other pipe part such that the pipe parts are rotated with respect to each other when they are connected. Further, the male end comprises a conical sealing surface and the female end comprises a corresponding conical sealing surface, whereby the sealing surfaces are positioned against each other to seal the connection between the two pipe parts.

In a yet further embodiment, one of the pipe parts comprises a male end and the other pipe part comprises a female end whereby the two pipe parts can be connected together by positioning the male end of one pipe part to the female end of the other pipe part such that the pipe parts are rotated with respect to each other when they are connected. The male end comprises at least two bayonet tabs and the female end comprises at least two counter surfaces, the bayonet tabs and the counter surfaces forming a bayonet catch for connecting the pipe parts together, whereby during connection the pipe parts are rotated less than 180° with respect to each other. The bayonet tabs are elongated and the tabs and counter surfaces are positioned obliquely at an angle to the circumferential direction of the pipe part. When connecting the pipe parts together, only less than a half turn must be made, which makes it very easy for the installer to make the connection. An elongated bayonet tab receives the force nearly around the entire pipe part.

In a yet further embodiment, the pipe parts are provided with rails and supported by a support bracket adapted to engage the rails. The support bracket can be pushed into a mounting rail very fast because it has an elongated base which can be inserted into the mounting rail in the direction of the mounting rail and thereafter, by turning the bracket 90°, it is fixed in the mounting rail. Further, the upper arm and lower arm of the support bracket are both flexible, whereby the mounting and especially the dismounting of the pipe part is very simple and easy.

### BRIEF DESCRIPTION OF THE DRAWINGS

In the following the invention will be described in greater detail by means of preferred embodiments with reference to the attached drawings, in which
Figure 1 schematically shows a side view of two pipe parts;
Figure 2 schematically shows an end view of an elbow inlet;
Figure 3 schematically shows a mounting rail with two support brackets;
Figure 4 is a cross-section along line A-A in Figure 3, and
Figure 5 is cross section along line B - B in Figure 4 showing a base of a bracket.

For the sake of clarity, embodiments of the invention are simplified in the figures. Like parts are denoted with like reference numbers in the figures.

### DETAILED DESCRIPTION OF THE INVENTION

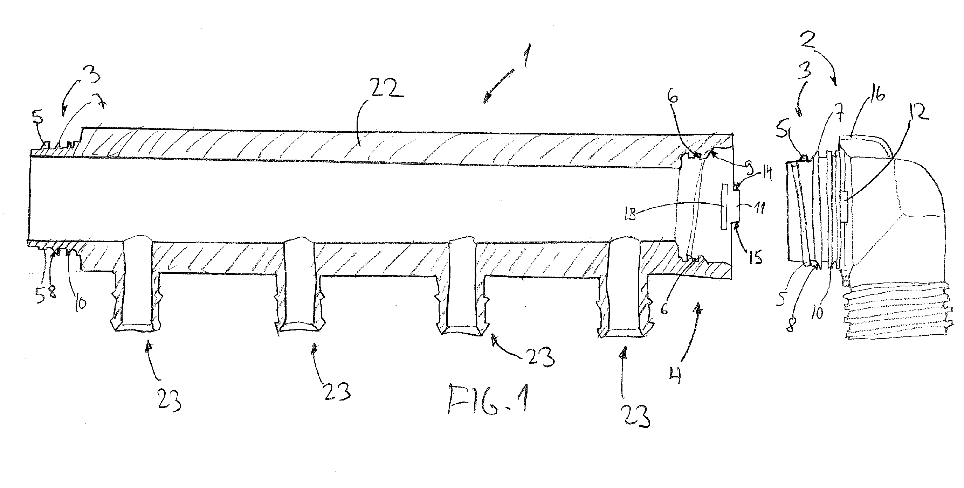

Figure 1 shows two pipe parts, namely a manifold 1 and an elbow inlet 2. The elbow inlet is shown as a side view and the manifold is shown as a side view and in cross-section. The manifold 1 and the elbow inlet 2 are examples of the pipe parts discussed in this description. Further examples of pipe parts are an end cap, T-connection or any other suitable fixture that can be used in plumbing and/or heating/cooling systems.

The manifold comprises a body 22 and a plurality of outlets 23 diverging therefrom. Both pipe parts comprise a male end 3. The manifold 1 further comprises a female end 4.

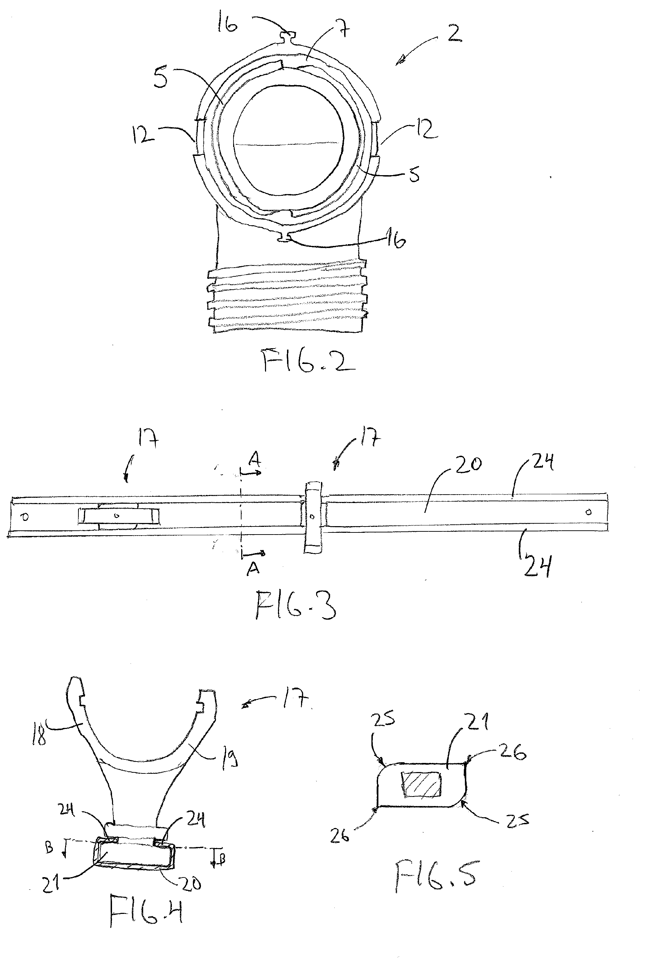

The male end 3 comprises two bayonet tabs 5. The female end 4 comprises counter surfaces 6. The counter surfaces 6 are formed by inward protruding protrusions. The bayonet tabs 5 are elongated. As shown in Figure 2, the bayonet tabs 5 are so long that their length is almost half of the length of the circumference of the pipe part. Thus, the contact surface between the bayonet tabs 5 and the counter surfaces 6 is rather large and thereby the elongated bayonet tab 5 receives the force nearly around the entire pipe part.

The bayonet tabs 5 and the counter surfaces 6 are positioned obliquely at an angle with respect to the circumferential direction of the pipe part. The bayonet tabs 5 and the counter surfaces 6 form a bayonet catch for connecting the pipe parts together. During connection of the pipe parts, they are rotated less than 180° with respect to each other.

The male end 3 comprises a circumferential ring 7 around the pipe part. The ring 7 is formed such that it has a conical sealing surface 8. The female end 4 comprises a corresponding conical sealing surface 9. When two pipe parts are connected together, the conical sealing surfaces 8 and 9 are positioned against each other to seal the connection between the two pipe parts. The ring 7 is preferably formed such that its outer end is narrow, whereby it can bend or deform when the pipe parts are assembled together thus enhancing the tightness of the sealing.

It is possible to make the connection without any additional O-rings. However, it is possible to provide the male end 3 with a circumferential protrusion 10 such that the ring 7 and protrusion 10 form a groove for an O-ring sealing.

The female end 4 is further provided with a protrusion 11 on its front face. The male end 3 is provided with a corresponding recess. In the embodiment shown in Figures 1 and 2, the recess is a notch 12 on the outer circumference of the pipe part. The protrusion 11 and the recess together lock the pipe parts to the correct position with respect to each other when they are connected by rotating them with respect to each other.

The protrusion 11 is positioned on the outer circumference of the pipe part whereby the protrusion 11 is manipulatable by a finger or a tool, for example, outside of the manifold for enabling the opening of the connection. A hollow 13 is arranged behind the protrusion. Because of the hollow 13, there is no need for excessive force for manipulating the protrusion. Preferably, the hollow 13 is longer than the protrusion 11.

The protrusion 11 has a front end 14 and a back end 15, which extend substantially in the axial direction of the pipe part. The front end 14 and the back end 15 form stop edges together with the corresponding surfaces of the recess such that the pipe parts stay in position in a reliable manner.

As shown in Figure 2, for example, the pipe parts can be provided with rails 16 on the opposite sides of the pipe part. The pipe parts can be supported by support brackets 17 shown in Figures 3 and 4. The support bracket 17 comprises first arm 18 and a second arm 19 adapted to engage the rails 16. Preferably, both the first arm 18 and the second arm 19 of the support bracket 17 are flexible, whereby the mounting and especially the dismounting of the pipe part is very simple and easy.

The support brackets 17 are positioned into a mounting rail 20. The mounting rail 20 can be attached to a wall of an assembly cabinet or to a wall without using an assembly cabinet, for example. The mounting rail 20 can be positioned either horizontally or vertically or in any other suitable direction.

The support bracket 17 has an elongated base 21 which can be inserted into the mounting rail in the direction of the mounting rail as shown in connection with the left support bracket 17 in Figure 3. Thereafter the support bracket 17 is turned 90° to fix it in the mounting rail to a position shown in connection with the right support bracket 17 in Figure 3.

The width or the base 21 is thus smaller than the distance between the flanges 24 of the mounting rail 20 and correspondingly the length of the base 21 is higher than said distance. Preferably the height of the base 21 is at least at its ends higher than the distance between the flange 24 of the mounting rail 20 and its bottom. Thus when the ends of the base 21 are under the flanges 24 the bracket 17 is fixed in position by friction even when the mounting rail 20 is assembled in a vertical position, for example.

As shown in Figure 5 the base 21 preferably has two rounded corners 25 and two sharp corners 26. The rounded corners 25 make it easier to turn the bracket from the insert position to the fixed position. Further the sharp corners 26 prevent turning the bracket more than 90° when it is fixed to the mounting rail 20.

In some cases, the features set forth in this description may be used as such, irrespective of other features. On the other hand, features set forth in this description may be combined, where necessary, to provide various combinations.

It will be obvious to a person skilled in the art that, as the technology advances, the inventive concept can be implemented in various ways. The invention and its embodiments are not limited to the examples described above but may vary within the scope of the claims. Thus, in some embodiments the pipe parts can be connected together by a threaded connection, for example, instead of the bayonet catch disclosed with reference to Figures 1 and 2. The number of bayonet tabs 5 can be three or four, or even more bayonet tabs 5 can be used. Further, the number of protrusions 11 can be two, or even more protrusions 11 can be used. Preferably, however, only one protrusion 11 is used, whereby the opening of the connection is easy. The number of the corresponding recesses can be higher than the number of the protrusions 11. If, for example, one protrusion 11 and two recesses are used, the pipe parts can be fixed to two different positions relative to each other.

## Claims

1. A connection between two pipe parts, wherein one of the pipe parts (1, 2) comprises a male end (3) and the other pipe part (1, 2) comprises a female end (4), whereby the two pipe parts (1, 2) can be connected together by positioning the male end (3) to the female end (4) such that the pipe parts (1, 2) are rotated with respect to each other when they are connected, at least one end (3, 4) of one pipe part (1, 2) is provided with at least one protrusion (11) and at least one end (3, 4) of the other pipe part (1, 2) is provided with a corresponding recess such that the protrusion (11) and the recess together lock the pipe parts (1, 2) to a correct position with respect to each other, **characterized in that** the protrusion (11) is positioned on the outer circumference of the pipe part (1, 2), whereby the protrusion (11) is manipulatable outside of the pipe part (1, 2).

2. A connection according to claim 1, **characterized in that** a hollow (13) is arranged behind the protrusion (11).

3. A connection according to claim 2, **characterized in that** the hollow (13) is longer than the protrusion (11).

4. A connection according to any one of the preceding claims, **characterized in that** the protrusion (11) has a front end (14) and a back end (15) which extend substantially in the axial direction of the pipe part and form stop edges keeping the pipe parts (1, 2) in position.

5. A connection according to any one of the preceding claims, c h a r a c t e r i z e d in that the recess is a notch (12) on the outer circumference of the pipe part (1, 2).

6. A connection according to any one of the preceding claims, **characterized in that** at least one of the pipe parts (1, 2) is a manifold (1).

7. A pipe connection between two pipe parts (1, 2), wherein one of the pipe parts (1, 2) comprises a male end (3) and the other pipe part (1, 2) comprises a female end (4) whereby the two pipe parts (1, 2) can be connected together by positioning the male end (3) to the female end (4) such that the pipe parts (1, 2) are rotated with respect to each other when they are connected, **characterized in that** the male end (3) comprises a conical sealing surface (8) and the female end (4) comprises a corresponding conical sealing surface (9), whereby the sealing surfaces (8, 9) are positioned against each other to seal the connection between the two pipe parts (1, 2).

8. A connection between two pipe parts (1, 2) wherein one of the pipe parts (1, 2) comprises a male end (3) and the other pipe part (1, 2) comprises a female end (4), whereby two pipe parts (1, 2) can be connected together by positioning the male end (3) to the female end (4) such that the pipe parts (1, 2) are rotated with respect to each other when they are connected, the male end (3) comprising at least two bayonet tabs (5) and the female end (4) comprising at least two counter surfaces (6), the bayonet tabs (5) and the counter surfaces (6) forming a bayonet catch for connecting the pipe parts (1, 2) together whereby during connection the pipe parts are rotated less than 180° with respect to each other, **characterized in that** the bayonet tabs (5) are elongated and the bayonet tabs (5) and the counter surfaces (6) are positioned obliquely with at an angle to the circumferential direction of the pipe part (1, 2).
